# EUROPEAN PATENT APPLICATION

(11) **EP 2 383 654 A1**
(43) Date of publication of application: **02.11.2011**
(21) Application number: 10161323.0
(22) Date of filing: 28.04.2010
(51) Int. Cl.: G06F 12/14

(54) **A memory device and a firmware configurator**

(71) Applicant: Siemens Aktiengesellschaft, 80333 Munich (DE)
(72) Inventor: Lang, Georg, 92237 Sulzbach-Rosenberg (DE); Pickelmann, Hans, 92259 Neukirchen (DE)

(57) **Abstract**

A memory device and a firmware configurator.

A memory device (2) including a data memory (6) divided into a plurality of logically independent memory segments (8), a memory interface (10) for accessing the data memory (6) on the memory device (2), a memory firmware (12) configured by a firmware configurator (4) for providing an access to a selection of memory segments (14) via the memory interface (10) and a configurator interface (36) to connect the memory device (2) to the configurator (4) for configuring the memory firmware (12) regarding the selection of the memory segments (14) of the memory device (2). The firmware configurator (10) includes a user interface (38) to configure the selection of the memory segments (14) via the configurator interface (36) and a graphical user interface (40) to graphically configure the selection of the memory segments (14).

## Description

A memory device and a firmware configurator.

The invention relates to a memory device and a firmware configurator.

A memory device stores data and makes it available for a data processor via a memory interface. Many kinds of memory devices are known, for example memory cards for digital cameras, USB drives for computers or memory device components which are integrated into industrial machines.

For many applications different memory devices containing different kinds of data have to be accessed by the data processor. An industrial machine often requires different memory devices for different uses of the machine, for example maintenance work, configuration or regular use of the machine. For this purpose different memory devices have to be made available and manually exchanged.

Thus, it is an object of the invention to simplify switching between different data memories.

This object is achieved by the memory device according to claim 1, the firmware configurator according to claim 8, the system according to claim 11 and the memory firmware according to claim 12.

The underlying idea of the invention is to subdivide the data memory of the memory device into a plurality of logically independent memory segments and only make a selection of this plurality of memory segments available via the memory interface of the memory device. By changing the configuration of the memory firmware of the memory device a different selection of memory segments is made available so that one can easily switch between different parts of the data memory. To a data processor accessing the memory device via the memory interface, the data memory will appear to be switched without the need for physically exchange the memory device.

According to one embodiment, the selection of memory segments is specified by memory addresses of the memory segments of the selection within the data memory thus helping to identify the memory segments through the memory addresses.

According to another embodiment, the selection of memory segments comprises a memory offset referring to the beginning of the first memory segment of the selection, thus easily hiding the memory segments prior to the offset for access by the data processor connected to the memory device via the memory interface.

According to an exemplary embodiment, the selection of memory segments comprises a length parameter defining the total memory length of the selection of memory segments from the memory offset, so that a data processor accessing the memory device can identify a volume of the data memory accessible to the data processor.

According to one embodiment, the memory device contains a meta memory for storing parameters defining the selection of memory segments, so that the memory firmware can provide an access to the device on a basis of the parameters.

According to another embodiment, the memory firmware provides access depending on a device establishing the access to the data memory via the memory interface, so that the memory device is able to make different selections available for different data processors without manually changing the configuration of the memory firmware.

According to yet another embodiment, the memory segments are divided into a master boot record part and a file system part, wherein the master boot record contains information for accessing the memory segment from the selection and the file system part stores data to be accessed by the data processor. Such a device helps to access the memory segments of the selection individually through the information for accessing contained in the master boot record part.

According to one embodiment, the memory device includes a configurator interface, so that a firmware configurator can connect to the memory device through the configurator interface. This helps to provide a easy connection mechanism for connecting the memory device and firmware configurator to configure memory device.

The firmware configurator uses a configurator interface to connect the memory device to the configurator. The firmware configurator includes a user interface to configure the selection of the memory segments via the configurator interface. Such a firmware configurator provides a user friendly configuration of the selection of segments of the data memory inside the memory device and provides a mechanism to create various selections selection of memory segments, so that simple switching between various selections can be provided inside the same data memory of memory device.

According to another embodiment, the firmware configurator is adapted to configure the selection of the memory segments of a plurality of memory devices, thus providing the firmware configurator which can configure many memory devices with the same firmware configurator without the need for a seprate firmware configurator for every memory device.

According to an exemplary embodiment, the firmware configurator includes a graphical user interface to graphically configure the selection of the memory segments, thus helping the user to configure the selection of memory segments in a user-friendly fashion.
FIG 1 shows a schematic diagram of a system of a memory device and a firmware configurator.
FIG 2A illustrates a logical structure of a data memory having the selection of memory segments containing an interleaving with other memory segments which are not part the selection
FIG 2B illustrates a logical structure of a data memory having the selection of memory segments with a continuity of memory segments in the selection.
FIG 3 shows different selections of memory segments available in side the data memory of memory device.
FIG 4 shows a graphical user interface of a firmware configurator.
FIG 5 shows a memory card as the memory device having a first selection of memory segments accessible by a camera and a personal computer and a second selection of memory segments accessible by the camera only.

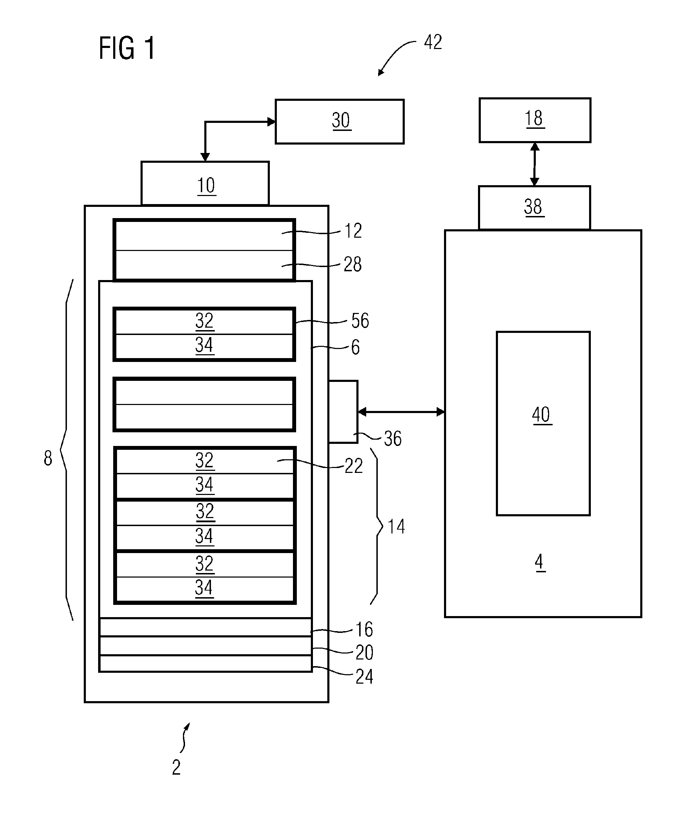

In reference to figure 1, a memory device 2 is connected to a firmware configurator 4 via a configurator interface 36 for configuring a memory firmware 12 of the memory device 2 in regards to a selection of memory segments 14 of a data memory 6 included in the memory device 2.

The memory device 2 stores data inside the data memory 6, wherein the data memory 6 is divided into a plurality of logically independent memory segments 8. The devices is provided with a memory interface 10 for accessing the data memory 6 on the memory device 2, while a memory firmware 12 included in the memory device 2 provides an access to the selection of memory segments 14 via the memory interface 10. Alternatively, the memory device 2 can be any readily available memory device 2 like for digital cameras, USB drives for computers or memory device components which are integrated into industrial machines or any such memory device 2 which is having the data memory 6 dividable into the memory segments 8, the memory interface 10 for accessing the data memory 6 on the memory device 2 and the memory firmware 12 configured for providing an access to the selection of memory segments 14 via the memory interface 10.

The memory device 2 also includes the configurator interface 36 to connect to the firmware configurator to configure the memory firmware 12 regarding the selection of the memory segments 14 of the memory device 2. Alternatively, the memory device 2 need not be connected to the firmware configurator 4 via the configurator interface 36; rather the firmware configurator 4 can be a part of the memory device 2 for configuring the memory firmware 12.

The data memory 6 is a part of the memory device 2 which is available for storing data. The data memory 6 is further divided logically into the plurality of independent memory segments 8. Out of these memory segments 8 the selection of memory segment 14 is determined by the memory firmware 12 and only the selection 14 would be available to be accessed by a data processor 30.

The memory segments 56 in the selection 14 are represented by memory address 16 for each memory segment 56 in the selection 14. Alternatively, memory segments 56 remaining in the plurality of memory segments 8 which are not part of the selection of memory segments 14 can also be referred by memory addresses 16 for each of the memory segments 56 remaining.

The selection of memory segments 14 also contains an offset 20 to refer to a beginning of a first memory segment 22 of the selection 14, so that a data processor 30 can start accessing from the first memory segment 22 and can further continue to access memory segments of the selection 14. Although the data processor 30 is not permitted to access memory segments logically placed before the first segment 22 in the plurality of memory segments 8. Alternatively, the offset 20 can also refer to an end of a last memory segment of the selection 14 logically placed in the end of all the memory segments 56 of the selection 14, so that the data processor 30 can stop accessing the selection 14 for memory segments 56 placed beyond the last memory segment.

The selection of memory segments 14 also includes a length parameter 24 defining the total memory length of the selection of memory segments 14. The total memory length can be determined by finding a difference of address of starting of the first memory segment 22 of selection 14 and address of ending of the last memory segment of the selection 14, if the selection 14 is continuous without interleaving of memory segments as referred in the plurality of memory segments 8. Alternatively, the selection of the memory segments 14 can have a interleaving pattern of the memory segments 56 of the selection 14 mixed with memory segments 56 which are not part of the selection 14 when accessed sequentially, thus the memory addresses 16 of all the memory segments 56 of the selection 14 are used to be referred by the memory firmware 12 for allowing access to the selection 14 to maintain a logical continuity of access. Yet alternatively, the total memory length helps the data processor 30 to establish a count of a volume of data available to be accessed, and other such data like time required to access data, speed required to access data and various such parameters which could be of importance to the data processor 30 while allocating processing and accessing resource to access the selection 14 by the data processor 30.

The memory device 2 also includes a meta memory 28 for storing parameters defining the selection of memory segments 14. When the memory device 2 is connected to the data processor 30, the memory firmware 12 provides an access to the data processor 30 taking the parameters in consideration. The memory firmware 12 also provides information based on these parameters to the data processor 30, so that to give directions to the data processor 30 for accessing the selection 14. The data processor 30 is only allowed to access the selection 14 and not other memory segments 56 remaining out of the plurality of memory segments 8 which are not part of the selection 14. To the data processor 30, it appears that other memory segments 56 which are not part of the selection 14 are non-existent. The parameter contains a reference to location, length, identification or any other parameters which can define the memory segments 56 in selection 14. In one alternate embodiment, the meta memory 28 also contains the memory addresses 16 of the memory segments 56 of the selection 14 or the memory offset 20 referring to the beginning of the first memory segment 22 of the selection 14 or the length parameter 24 or any combination thereof. In yet alternate embodiment, the meta memory 28 also contains data in regards to an accessibility rights to memory segments 56 of the selection 14 like rights to read, right to write, right to modify, right to delete or any such right. Alternatively, the meta memory 28 can have different accessibility rights for different memory segments 56 in the selection 14. Yet alternatively, the accessibility rights can be mapped over to a type of data processor 30 like personal computers, camera, etc. or an identification of data processor 30 like any numerals, alpha- numerals, alphabets, or radio frequency identification or any such identification 30.

Each of the plurality of memory segments 8 are further divided into a master boot record part 32 and a file system part 34, in such a way that the master boot record 32 contains information for accessing the memory segment 56 from the selection 14 and the file system part 34 stores data to be accessed by the data processor 30. Alternatively, the information of the master boot records 32 can also be further stored into the meta memory 28 to provide the memory firmware 12 with an option to use information in the master boot record while providing an access to the data processor 30.

The memory firmware 12 is software program having instruction to provide an access to the data processor 30 for accessing the selection of memory segments 14. The memory firmware 12 is loaded and executed in to the memory device 2. The memory firmware 12 reads the meta memory 28 to read definitions in regards to the selection of memory segments 14 and on that basis, the memory firmware 12 provides access to the data processor 30.

The memory firmware 12 is configured in relation to the selection 14 by the firmware configurator 4 when the memory device 2 to which the memory firmware 12 is a part, gets connected to the firmware configurator 4 via the configurator interface 36.

The memory firmware 12 while providing the access to the data processor 30 also provides information in relation to memory addresses 16 of the memory segments 56 in the selection 14, the memory offset 20 and the length parameter 24, so that the data processor 30 can only access the memory segments 56 of the selection 14 and not other memory segments 56 remaining out of the plurality of memory segments 8which are not part of the selection 14. In an alternate embodiment, the memory firmware 12 restricts accessibility to the memory segments 56 remaining out of the plurality of memory segments 8 which are not part the selection 14, so that the data processor 30 can be strictly limited to access only the memory segments of the selection 14 and not the memory segments 56 remaining out of the plurality of memory segments 8 which are not part of the selection 14.

The firmware configurator 4 is a computer program product, which performs a set of computer program steps when it is loaded and executed into a memory of a computer.

The firmware configurator 4 includes a user interface 38 to configure the selection of the memory segments 14 via the configurator interface 36. On connecting, the firmware configurator 4 configures the memory firmware 12 in relation to the selection of the memory segments 14. The firmware configurator 4 reads meta memory 28 of the memory device 2 to identify definitions of the selection 14. These defintions are made available to an user 18 via user interface 38, so that the user 18 configures the selection of memory segments 14 by modifying definitions of the selection 14 in the meta memory 28. In an alternate embodiment, the firmware configurator 4 can provide definitions in regards to multiple selections of the memory segments 14 to be accessible by different data processors 30. Yet alternatively, the configurator 4 can modify definitions of the selection 14 in regards to accessibility rights for the memory segments 56 of the selection 14 like rights to read, right to write, right to modify, right to delete or any such right.

In an exemplary embodiment, the configurator 4 configures the selection of the memory segments 14 of a plurality of memory devices connected to the firmware configurator 4 through the configurator interface 36. The user 18 can select a connected memory device 2 one at a time and can configure the selection of the memory segments 14 in the connected memory device 2.

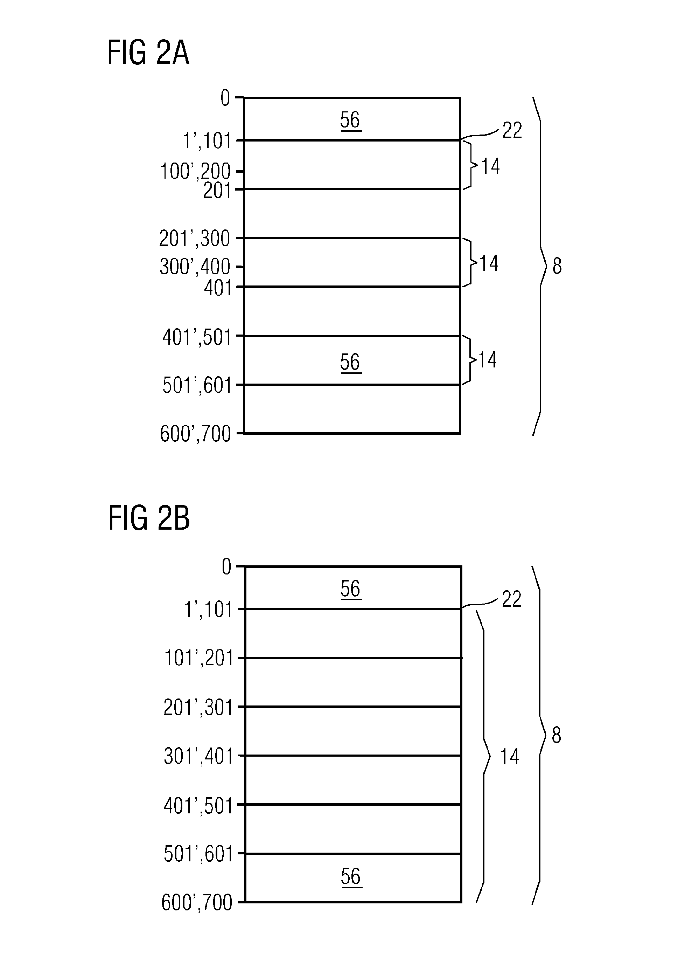

In reference to FIG 2A, a case is illustrated for the selection of the memory segments 14 having an interleaving with the memory segments 56 of the plurality of memory segments 8 which are not part the selection 14. It shows an example of the selection 14 having the memory addresses 16 for the memory segments 56 as 101 to 200, 301 to 400, 501 to 600, 601 to 700. The first memory segment 22 of the selection 14 is referred by the memory addresses from 101 to 200 with the offset 20 of the first memory segment 22 of the selection 14 is referred as 101, and the length parameter 24 of the selection 14 is provided as 400. The selection 14 has the interleaving of the memory segments 56 which are not part of the selection 14 having memory addresses 16 as 201 and 401. So, the memory segments 56 before 101, after 700, from 201 to 300 and from 401 to 500 are not accessible to the data processor 30. In such a case, the memory addresses are remapped to provide a remapped address for 101 to 200 as 0' to 100', 301 to 400 as 101' to 200', 501 to 600 as 201' to 300', 601 to 700 as 301' to 400'. This will provide a logical continuity to the data processor 30 while accessing the selection 14. Alternatively, the data processor 30 can access the selection 14 with the help of memory addresses 16 of each memory segment 56 in the selection 14 to maintain the logical continuity and in such case, the data processor 30 access from 101 to 200, 301 to 400, and 501 to 600 directly without being allowed to access memory locations 201 to 300 and 401 to 500 respectively which are memory addresses 16 for the memory segments 56 which are not part of the selection 14. On a basis of the length parameter 24 determining a total memory length, in this case 400, the memory firmware 12 will not provide further access to the data processor 30 for accessing the memory segments 56 in the plurality of the memory segments 8 when the data processor 30 have reached to an end of a last memory segment in the selection 14, in this case beyond 700 for memory addresses 16 or remapped memory addresses 400'.

In reference to FIG 2B, a case is illustrated for the selection of memory segments 14 having a sequential continuity of the memory segments 56 in the selection 14. It shows an example of the selection 14 having the memory addresses 16 for the memory segments 56 as 101 to 200, 201 to 300, 301 to 400, 401 to 400, 501 to 600 and 601 to 700. The offset 20 of the first memory segment 22 of the selection 14 is referred as 101, while the length parameter 24 is provided as 600. The memory segments 56 before 101 and after 700 are not accessible to the data processor 30. In such a case, the memory addresses are remapped to provide a remapped address for 101 to 200 as 1' to 100', 201 to 300 as 101' to 200', 301 to 400 as 201' to 300', 401 to 500 as 301' to 400', 501 to 600 as 401' to 500', 601 to 700 as 501' to 600'. This will provide a logical continuity to the data processor 30 while accessing the selection 14. Alternatively, the data processor 30 can access the selection 14 with the help of memory addresses 16 of each memory segment 56 in the selection 14 to maintain the logical continuity and in such case, the data processor 30 access from 101 to 700 directly without being allowed to access memory locations before 101 which are memory addresses 16 for the memory segments 56 which are not part of the selection 14. On a basis of the knowledge of the offset 20 for the first memory segment 22, in this case 101 and the length parameter 24 for total length of the selection 14, in this case 600, the memory firmware 12 will not provide access to the data processor 30 for accessing the memory segments 56 in the plurality of memory segments 8 before the memory address 101 or remapped memory address 1'.

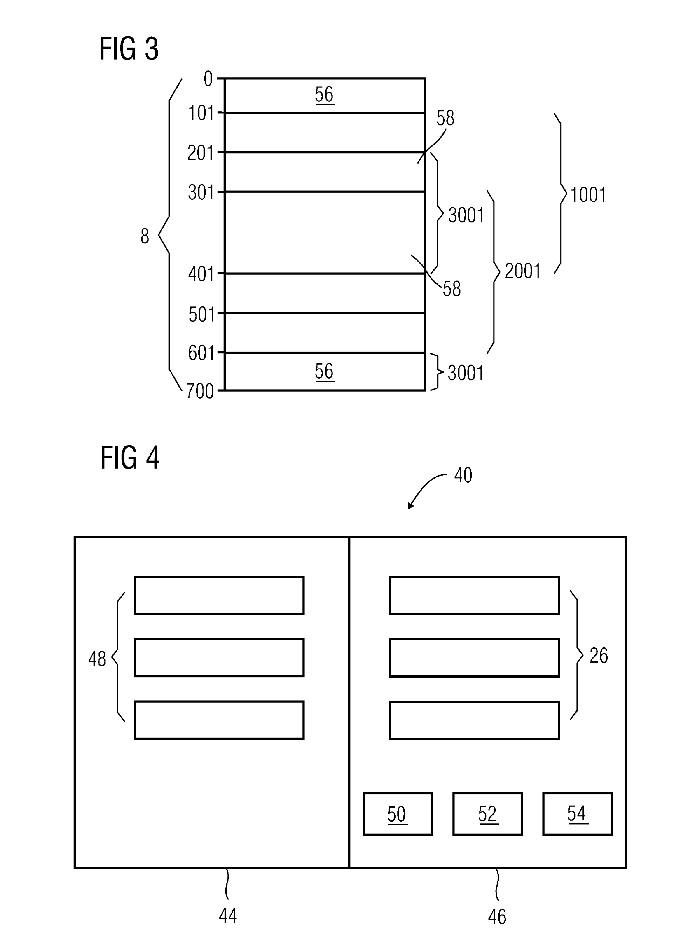

According to FIG 3, an exemplary embodiment is illustrated showing different selections of memory segments 14 available in side the data memory 6 of the memory device 2. Each selection of memory segments 14 can be accessed by different data processor 30. Each of the data processor 30 is identified by a processor identification available with the data processor. The selections 14 available in the data memory 6 can be referred by a numeral which is made available to memory firmware 12 at the time of providing access to the data processor 30 accessing a selection 14. The selections are referred here by numerals 1001, 2001 and 3001, wherein each selection 14 is accessible by different data processors 30. In the selection memory segments 14 can be overlapped, so that the overlapped memory segment 58 can be made available to different data processors 30 when they are trying to access the selection 14 which they are authorized to access. In this case the selection referred to numeral 1001 is having memory segments 56 with memory addresses 16 as 101 to 200, 201 to 300, 301 to 400 and the selection 14 with numeral 2001 is having memory segments 56 with memory addresses 16 as 301 to 400, 401 to 500, 501 to 600 and the selection referred by numeral 3001 is having the memory segments 56 with memory addresses 16 as 201 to 300, 301 to 400 and 601 to 700. In this case, the memory segment 56 with memory address as 301 to 400 is accessible by the data processor 30 of all the three selections 14 and the memory segment 56 referred by memory address 201 to 300 is accessed by data processors 30 of the selection referred by numerals 1001 and 3001. The data describing the different selections 14 is made available to the memory firmware 12, so that the memory firmware 12 decides over selections 14 to be accessed by the data processor 30 having particular processor identification approaching the data memory 6 via the memory interface 10. In an alternate embodiment, the data processor 30 can have the processor identification to identify type of the data processor performing similar functions like camera, washing machines, personal computers, mobile phones, or any other data processors 30 belonging to similar functional category for any particular function, so that all the data processor 30 of same type can access the selections 14 eligible to be accessed by any one of the data processor 30 of same type.

In an exemplary embodiment, the firmware configurator 4 is having a graphical interface as illustrated in FIG 4, wherein the graphical interface 40 is used for configuring the memory firmware 12 regarding the selection of memory segments 14. The graphical user interface 40 is divided into a first part 44 and a second part 46. The first part 44 shows the plurality of memory devices 48 which are connected to the firmware configurator 4 through the configurator interface 36 of each of the plurality of memory devices 48 having the memory firmware 12. The user 18 controls the configuration of the memory firmware 12 by the firmware configurator 4 via user interface 38. The user 18 selects one of the memory devices 2 from the plurality of memory devices 48. On the basis of the selection 14 by the user 18 for the memory device 2, the firmware configurator 4 reads the meta memory 28, the memory addresses 16 of the memory segments of the selection 14, the offset 20 and the length parameter 24 to list of memory segments 26 comprising of selection of memory segments 14 and the memory segments 56 which are not part of the selection 14 in the second part 46 of the graphical user interface 40. The user 18 makes a selection out of the list of memory segments 26 shown in the second part 46. The user 18 can add memory segments 56 and delete memory segments 56 from the list of memory segments 26 by clicking control buttons for deleting and adding 50, 52 respectively from the memory segments 8 in respect to a memory segment 56 selected from the list 26 in second part 46. The user 18 can activate a new segment in the selection 14 than the user 18 can click a control button for activating 54 the new segment.

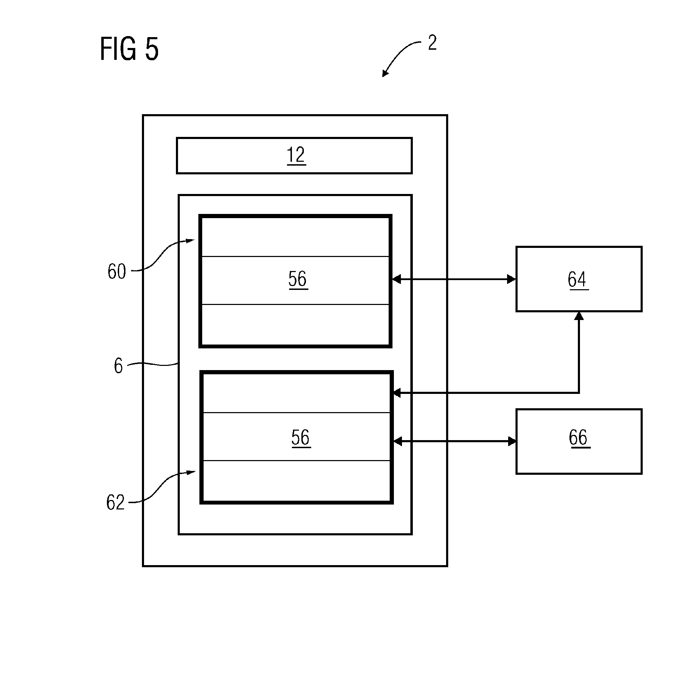

In reference to FIG 5, an exemplary embodiment of the invention is illustrated wherein the memory device 2 is a memory card for a camera 64 having the data memory divided into two selections of memory segments 14, a first selection 60 and a second selection 62. When the memory device 2 is loaded into the camera 64, the memory firmware 12 provides access to the camera 64 for the first selection 60 to save images clicked by the camera 64, or any such information other than system related data and for the second selection 62 to store some system related data like hardware information, operating system information, etc. On the other hand, when the memory device 2 is loaded into a personal computer 66 or any other processor not authorized to access the first selection, than the memory firmware 12 provides access to the second selection 62 only. The access provided by the memory firmware 12 can be for copying, or editing, or deleting, or any other such functions for accessing the data stored in the selection or any combination of such functions thereof.

## Claims

1. A memory device (2) comprising:
- a data memory (6) divided into a plurality of logically independent memory segments (8),
- a memory interface (10) for accessing the data memory (6) on the memory device (2),
- a memory firmware (12) configured for providing an access to a selection of memory segments (14) via the memory interface (10).

2. The memory device (2) according to claim 1, wherein the selection of memory segments (14) is specified by memory addresses (16) of the memory segments of the selection (14) within the data memory (6).

3. The memory device (2) according to any of the claims 1 or 2, wherein the selection of memory segments (14) comprises a memory offset (20) referring to a beginning of a first memory segment (22) of the selection (14).

4. The memory device (2) according to the claim 3, wherein the selection of memory segments (14) comprises a length parameter (24) defining the total memory length of the selection of memory segments (14) from the memory offset (20).

5. The memory device (2) according to any of the claims 1 to 4 further comprises a meta memory (28) for storing parameters defining the selection of memory segments (14).

6. The memory device (2) according to any of the claims 1 to 5, wherein the memory firmware (12) provides access depending on a data processor (30) establishing the accesses to the data memory (6) via the memory interface (10).

7. The memory device (2) according to any of the claims from 1 to 6, wherein the memory segments (8) are divided into a master boot record part (32) and a file system part (34).

8. The memory device (2) according to any of the claims from 1 to 7 comprising a configurator interface (36) to connect the memory device to a firmware configurator (4) for configuring the memory firmware (12) regarding the selection of the memory segments (14) of the memory device (2).

9. A firmware configurator (4) for configuring the memory firmware regarding the selection of the memory segments (14) of the memory device (2) according to claim 1 to 7, comprising:
- a user interface (38) to configure the selection of the memory segments (14) via the configurator interface (36).

10. A firmware configurator (4) according to claim 9, wherein the firmware configurator (4) is adapted to configure the memory firmware (12) regarding the selection of the memory segments (14) of a plurality of memory devices (48).

11. A firmware configurator (4) according to claim 9 or 10, comprising a graphical user interface (40) to graphically configure the memory firmware (12) regarding the selection of the memory segments (14).

12. A system (42) comprising:
- a memory device (2) according to any of the claims from 1 to 7, and
- a firmware configurator (4) according to any of the claims from 8 to 10.

13. A memory firmware (12) loadable to a memory device (2) with a data memory (6) divided into a plurality of logically independent memory segments (8) and a memory interface (10) for accessing the data memory (6), wherein the memory firmware (12) provides access to a selection of memory segments (14) via the memory interface (10) when it is executed into the memory device (2).

14. A memory firmware (12) according to claim 13, wherein the selection of memory segments (14) is specified by memory addresses (16) of the memory segments of the selection (14) within the data memory (8).

15. A memory firmware (12) according to claim 13 or 14, wherein the selection of memory segments (14) comprises a memory offset (20) referring to a beginning of a first memory segment (22) of the selection (14).

16. A memory firmware (12) according to claim 15, wherein the selection of memory segments (14) comprises a length parameter (24) defining the total memory length of the selection of memory segments (14) from the memory offset (20).
